# EUROPEAN PATENT SPECIFICATION

(11) **EP 4 554 695 B1**
(45) Date of publication and mention of the grant of the patent: **24.06.2026**
(21) Application number: 24740501.2
(22) Date of filing: 27.06.2024
(51) Int. Cl.: A63F 13/23, A63F 13/90, A63F 13/213, A63F 3/00

(54) **APPARATUS AND METHOD**
VORRICHTUNG UND VERFAHREN
APPAREIL ET PROCÉDÉ

(30) Priority: 28.06.2023 GB 202309745
(43) Date of publication of application: 21.05.2025
(73) Proprietor: Conductr Limited, Manchester M32 0JT (GB)
(72) Inventor: VAN DER STEEN, Johannus Henricus Derek, Greenhill, Evesham WR11 4NS (GB); CLIFF, Peter Nicholas Taylor, Stretford M32 0DA (GB); BROWN, Timothy Nelson, London SE14 6AZ (GB)
(74) Representative: Brothers, Christopher Michael
(86) International application number: PCT/GB2024/051641
(87) International publication number: WO 2025/003667

(56) References cited:
- EP-A1- 3 045 214
- WO-A1-2022/053662
- US-A1- 2008 076 550
- US-A1- 2012 094 750

## Description

This invention relates to an automatic tracking system for a game which includes moving objects.

EP3045214 discloses a board game comprising a board with a plurality of positioning areas for game pieces whereby these positioning areas comprise identification patterns. The board game further comprises an optical identification device for reading identification patterns and a plurality of these game pieces wherein each game piece is adapted to receive and hold the optical identification device such that an identification pattern underneath said game piece is exposed to said optical identification device for reading. The optical identification device is further adapted to read the identification pattern underneath the game piece when held in the game piece thereby obtaining an identification of a positioning area on which the game piece is located.

US2008076550 discloses a medium position detection device including a medium moving space formed in which a plurality of media can simultaneously move without overlapping in a predetermined direction, a light-guiding plate which perpendicularly intersects the predetermined direction and defines the front of the medium moving space, a light source disposed to emit light entering an end surface of the light-guiding plate, a reflecting section formed in the light-guiding plate so that the light having entered the light-guiding plate is reflected by the reflecting section and exits the light-guiding plate through a back surface of the light-guiding plate, and detection means which detects the light from the light-guiding plate.

According to a first aspect of the present invention, there is provided apparatus comprising a game surface over which one or more game pieces are movable, the one or more game pieces carrying a unique identification marker, an optical sensor device directed toward said game surface, a controller device, illuminating means serving to emit electromagnetic radiation towards said game surface, and a data processing device, the arrangement being such that said optical sensor device is arranged to receive image data of the game surface including the unique identification marker of the or each game piece on the game surface, the game surface being illuminated by said illuminating means, wherein the controller device is connected to the optical sensor device and the illuminating means and serves to control the illuminating means in response to the image data received by the optical sensor device, said data processing device serving to detect from said image data of the or each unique identification marker a position and orientation of said one or more game pieces relative to said optical sensor device characterised in that the optical sensor device has its field of vision covering substantially the whole of the game surface and in that a software subsystem is arranged to operate on the data processing device to interpret a digital form of the unique identification marker of the or each game piece and to accurately detect and decode the or each game piece marker, the software sub-system being a computer vision sub-system arranged to implement a series of image processing steps of data captured by the optical sensor device, wherein the computer vision sub-system serves to calculate a transformation matrix for the or each unique identification marker that relates a coordinate system for each unique identification marker relative to a coordinate system of the optical sensor device, and thereby determine a position and orientation of the unique identification marker relative to the optical sensor device.

According to a second aspect of the present invention, there is provided a method of automatic detection of position and orientation of one or more game pieces within the bounds of a game surface, the or each game piece carrying a unique identification marker, optically monitoring said game surface with an optical sensing device including optically monitoring for the unique identification marker of the or each game piece, said monitoring further including controlling the illumination of said game surface with electromagnetic radiation and receiving image data of the or each unique identification marker from said optical sensing device, and processing said image data to detect position and orientation of said one or more game pieces relative to said optical sensor device, characterised by the optical sensor device having its field of vision covering substantially the whole of the game surface, the optical sensor device capturing in digital form the or each unique identification marker of respective game pieces, wherein a computer vision sub-system analyses data captured by the optical sensor device to identify and extract the or each unique identification marker, wherein the computer vision sub-system implements a series of image processing steps of the data captured by the optical sensor device, wherein the image processing steps carried out by the vision subsystem identifies the unique identification marker relative to the optical sensor device and subsequently calculating a transformation matrix for the or each unique identification marker that relates the individual unique identification marker coordinate system relative to the coordinate system of the optical sensor device, thereby determining the position and orientation of the unique identification marker relative to the optical sensor device.

Owing to these two aspects, the detection of the position and orientation of the or each game pieces and their unique identification markers can be both scalable and robust against partial occlusion, offering reliable detection even in challenging lighting conditions and at varying distances or angles.

Furthermore, the unique identification marker provides a highly efficient, low-cost method for 3-dimensional localization and orientation detection in machine vision systems.

Two-dimensional representation of binary information, is primarily used for pose estimation and location identification in computer vision applications.

The optical sensor device is preferably a camera device advantageously equipped to detect light in the visible and/or infrared electromagnetic spectrum.

The game pieces are used for carrying a unique identification marker which the optical sensor device captures in a digital form.

The environment in which the game surface exists requires illumination via the illumination means which are preferably in the form of a lighting array emitting electromagnetic radiation in the visible and/or infrared spectrum to ensure marker visibility to the optical sensor device.

Advantageously, a software subsystem is engineered to operate on the data processing device to interpret the digital form of the unique identification marker of the game piece and to accurately detect and decode the game piece marker.

The controller device is arranged to automatically adjust the illumination of the game surface to effectively handle contrast and brightness variations within the visible and/or infrared spectrum.

In order that the present invention can be clearly and completely disclosed, reference will now be made, by way of example only to the accompanying drawings, in which:-
Figure 1 is a plan view of four game pieces, each carrying a unique identification marker,
Figure 2 is a schematic diagram of a first embodiment of a system for the detection of the position and orientation of one or more game pieces on a game board relative to an optical sensing device,
Figure 3 is a flow diagram of the operation of the apparatus of Figure 1,
Figure 4 is a view similar to Figure 1, but of a second embodiment of the system, and
Figure 5 is a flow diagram of the operation of the apparatus of Figure 2.

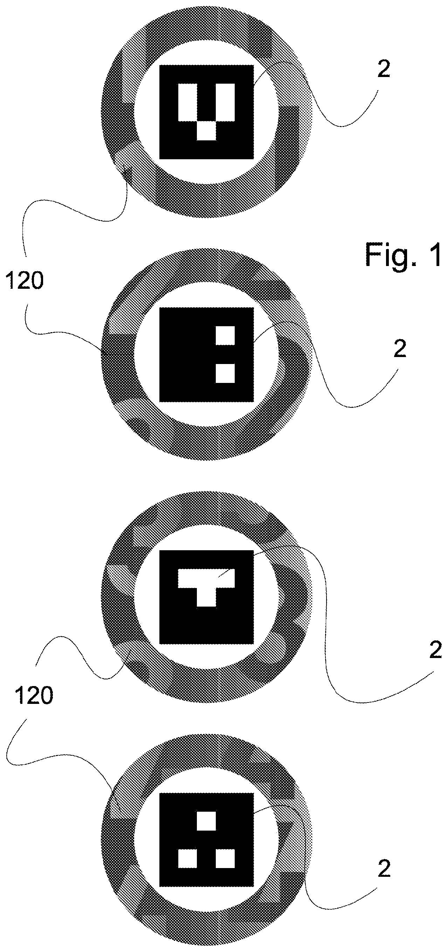

Referring to Figure 1, a game piece 120 comprises a unique identification marker in the form of a square fiducial emblem 2 comprised of a binary matrix residing within a black boundary. This emblem 2 serves as the unique identification marker in a variety of machine vision contexts, including, but not limited to, camera calibration, game piece orientation and location detection.

The binary matrix grid of the emblem 2 can have variable sizes such as 4x4, 5x5, 6x6, up to 7x7, where each cell within the grid corresponds to either a binary one or zero, represented by black or white squares respectively. The matrix codifies unique identification information, allowing each individual emblem 2 to be distinctly recognizable by an appropriately trained machine vision system. To ensure rotational invariance, a distinct arrangement of cells, for example three black corners and one white corner, is designed into the unique identification marker, allowing the machine vision system to discern the marker's orientation in 3-dimensional space, even when the game piece is rotated.

A vast number of unique emblems 2 are possible, each emblem 2 being identifiable through a vision algorithm capable of recognizing and decoding this form of binary pictographic symbology.

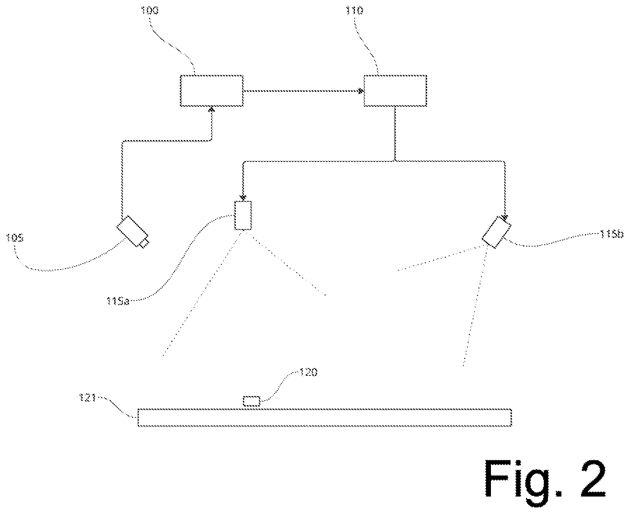

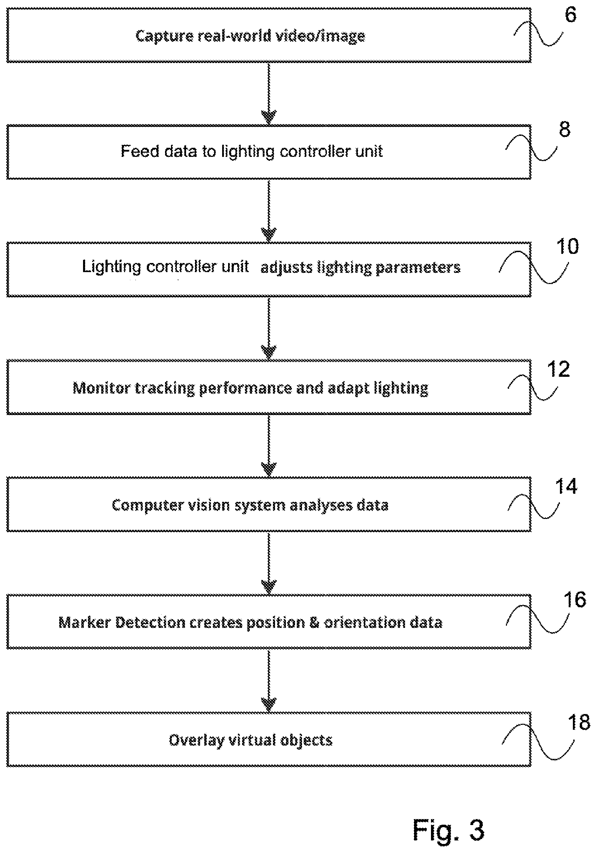

Referring to Figures 2 and 3, a first embodiment of a system 4 for the detection of the position and orientation of the one or more game pieces 120 on a game surface or board 121 is shown and utilizes the two-dimensional fiducial emblems 2 for machine vision applications. The system 4 further comprises a data processing device or server 100, an optical sensor device 105 in the form of a camera device and preferably a tracking camera device, a controller device 110 in the form of a lighting control unit and a plurality of illumination devices 115a and 115b in the form of light-emitting devices which are capable of emitting electromagnetic radiation in the visible and/or infrared spectrum.

In use, at the start of a game and throughout the game period, the tracking camera 105, which has its field of vision covering substantially the whole of the game surface 121, captures real-world video or image data to be converted into a digital form. This capture also includes video or image data relating to the emblems 2 carried by the game piece(s) 120. The tracking camera 105 does not need to have a single field of vision covering substantially the whole of the game surface as a plurality of tracking cameras may be used with the their respective fields of vision can be electronically stitched together to form a field of vision covering substantially the whole of the game surface 121.

The captured video or image data is fed to the lighting controller unit 110 connected to the tracking camera 105 by way of the data processing server 100. The lighting control unit 110 dynamically adjusts the lighting conditions of a game environment in real-time, such as by making adjustments to brightness, contrast, and exposure, based on feedback from the tracking camera 105 and the video or image data. In this way, the system 4 continuously monitors performance and adapts the lighting conditions 12 in the game environment in order to maximize visibility and distinctiveness of the or each tracked game piece 120, enhancing the overall tracking accuracy and robustness. This adaptive illumination greatly assists in locations where lighting conditions may impede tracking.

The data processing device 100 and a computer vision sub-system analyses 14 the video or image data to identify and extract the unique identification marker patterns of the emblems 2. The computer vision sub-system implements a series of image processing steps of the video or image data captured by the tracking camera 105, such as edge detection, feature extraction, and pattern matching. In this way, following data capture, the computer vision sub-system analyses the video or image data, identifying and extracting game piece features from the scene rather than recognising specially designed game pieces specific to the game being played.

As a result of the image processing steps carried out by the computer vision subsystem, the unique identification marker patterns of the emblems 2 relative to the tracking camera 105 are detected 16. The computer vision sub-system then calculates the transformation matrix for the emblem 2 that relates the individual emblem's coordinate system relative to the tracking camera's coordinate system, thus determining the position and orientation of the emblem 2 relative to the tracking camera 105. The transformation matrix provides information about the translation (position) and rotation (orientation) of the emblem 2 in three-dimensional space.

By continuously analysing the video or image data feed and continuously updating the position and orientation of the emblems 2, continuous tracking of the movement of the game pieces 120 is achieved in real-time.

Advantageously, displaying the real-time tracking information and displaying it on a user interface allows the ability to overlay 18 the real world video or image data with virtual objects in the form of computer-generated graphics, thereby creating a live association between the physical and digital world, and enhancing a user experience.

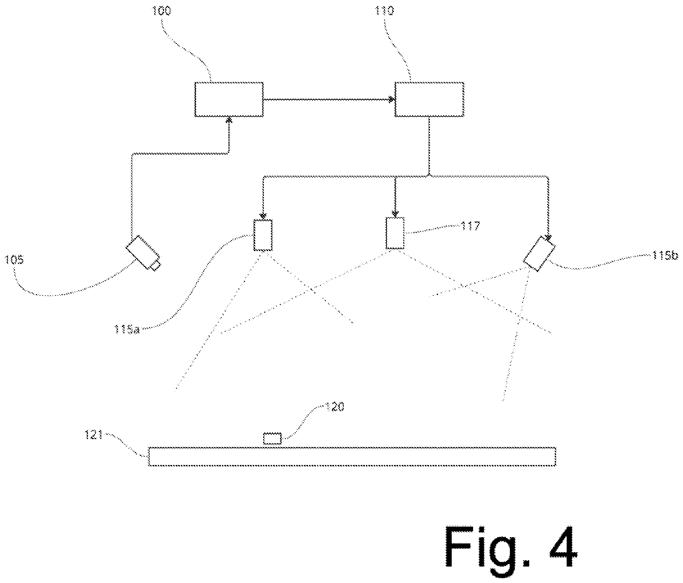

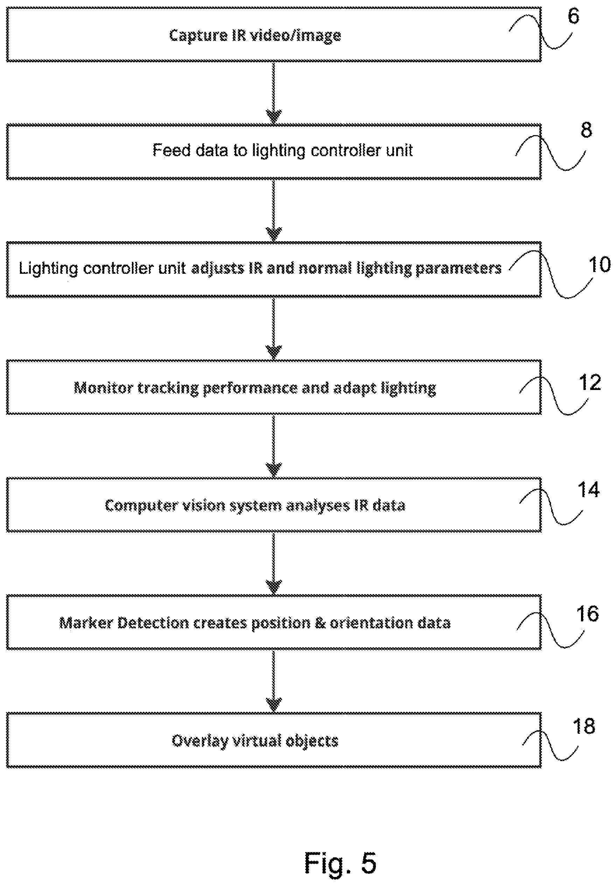

Referring to Figures 4 and 5, a second embodiment of the system 4 deploys an infrared (IR) system that relies on the or each emblem 2 being either constructed from IR-reflective material or the or each game piece being retrofitted with IR-emitting devices, such as LEDs. This IR-based system is designed to operate outside of the human visible electromagnetic spectrum, providing an unobtrusive solution for real-world contexts and comprises the data processing server 100, the tracking camera 105, the lighting controller unit 110, the illuminating devices 115a and 115b emitting electromagnetic radiation in the visible spectrum, the game board 121 and the game piece(s) 120 as with the first embodiment, but further includes an IR illuminating device 117 emitting electromagnetic radiation in the IR spectrum towards the game board 121.

In this embodiment, the tracking camera 105 is also arranged to operate within the IR spectrum to capture reflected IR radiation from the game board 121. Captured IR radiation including that reflected from the IR emblems is then translated into digital information. Alternatively, the tracking camera 105 from Figures 2 and 3 can be used if equipped with an IR-pass filter, allowing only the IR wavelengths through while blocking the radiation in the visible spectrum.

The IR illuminating device 117 forms the IR light source for the game environment and preferably take the form of and IR LED array to ensure emblem visibility to the IR camera 105. The IR light source 117 casts an IR illumination throughout the game environment to allow for effective detection of the emblems 2.

The software sub-system of the server 100 is specifically engineered to interpret the unique IR image input to accurately detect and decode the binary matrix inscribed within the emblems 2, similar to the first embodiment of Figures 2 and 3. The lighting controller unit 110, as with the first embodiment, automatically makes adjustments to the IR illumination to effectively handle contrast and brightness variations within the IR spectrum, differing from those in the visible light spectrum.

The emblems 2 are preferably either made from IR-reflective materials or fitted with IR-emitting LEDs as already mentioned and such emblems are designed to be highly responsive to the IR illumination device 117, thereby providing clear, detectable signals to the IR tracking camera 105.

Potential IR interference and presence from other IR light sources from other devices operating within the IR spectrum in or around the game environment, such as specific security cameras may cause those other devices to detect the emblems 2. Thus, the system 4 is to be designed and implemented to provide precautions to ensure system integrity and effectiveness in diverse operational environments.

In use, the system 4 incorporating marker-based tracking methodology within computer vision monitors the location and alignment of the game piece(s) in the game environment. The system 4 of Figures 4 and 5 utilizes IR emblems 2, reflecting and/or emitting electromagnetic radiation outside the visible spectrum, thereby rendering the tracking process invisible to the naked eye. The system also integrates the lighting controller unit 110 that adjusts illumination conditions of the game environment in real-time.

The specifically designed emblems, made of IR-reflective material or IR-emitting LEDs, are strategically placed on the or each game piece. These emblems consist of unique visual patterns that the computer vision sub-system is able to detect and identify, even within the IR spectrum.

Initiating the IR tracking operation involves the acquisition 6 of an image or video feed using the data captured from the tracking camera 105, which is capable of detecting the IR emblems. Such data is directed 8 into the lighting controller unit 110 which acts to dynamically fine-tune lighting parameters 10 such as brightness, contrast, and exposure, utilizing feedback from the camera 105. Through continuous evaluation of the tracking performance and real-time adaptation of the lighting conditions 12, the lighting control unit 110 ensures optimal visibility and distinction of the or each tracked game piece in the IR spectrum, boosting overall tracking precision and reliability.

Subsequently, the computer vision sub-system scrutinizes the image or video data 14 to locate and isolate the emblem patterns within the game environment scene. This process involves various image processing procedures such as edge detection, feature extraction, and pattern matching; all engineered to work with IR imagery.

Upon detection of the emblem patterns, the computer vision sub-system calculates their position and orientation 16 relative to the tracking camera 105. This is achieved by determining the transformation matrix linking the emblem's coordinate system with that of the tracking camera. The transformation matrix yields information on the translation (position) and rotation (orientation) of the emblem in three-dimensional space.

By constantly analysing the image or video feed and updating the position and orientation of the marker, the technology is capable of real-time tracking of game piece movement. The resultant data is leveraged to overlay 18 physical objects with computer-generated graphics, establishing a dynamic correlation between the 30 physical and digital realms.

By utilizing the lighting controller unit 110 to dynamically adjust illumination conditions in the game environment, the system 4 recognizes and tracks the uniquely marked game piece(s), eliminating the need for specially designed game pieces specific to the game being played.

## Claims

1. Apparatus comprising a game surface (121) over which one or more game pieces (120) are movable, the one or more game pieces (120) carrying a unique identification marker (2), an optical sensor device (105) directed toward said game surface (121), a controller device (110), illuminating means (115a, 115b) serving to emit electromagnetic radiation towards said game surface (121), and a data processing device (100), the arrangement being such that said optical sensor device (105) is arranged to receive image data of the game surface (121) including the unique identification marker (2) of the or each game piece (120) on the game surface (121), the game surface being illuminated by said illuminating means (115a, 15b), wherein the controller device (110) is connected to the optical sensor device (105) and the illuminating means (115a, 115b) and serves to control the illuminating means in response to the image data received by the optical sensor device, said data processing device (100) serving to detect from said image data of the or each unique identification marker (2) a position and orientation of said one or more game pieces (120) relative to said optical sensor device (105) **characterised in that** the optical sensor device has its field of vision covering substantially the whole of the game surface (121) and **in that** a software subsystem is arranged to operate on the data processing device to interpret a digital form of the unique identification marker (2) of the or each game piece (120) and to accurately detect and decode the or each game piece marker, the software sub-system being a computer vision sub-system arranged to implement a series of image processing steps of data captured by the optical sensor device (105), wherein the computer vision sub-system serves to calculate a transformation matrix for the or each unique identification marker (2) that relates a coordinate system for each unique identification marker relative to a coordinate system of the optical sensor device, and thereby determine a position and orientation of the unique identification marker (2) relative to the optical sensor device (105).

2. Apparatus according to claim 1, wherein the illumination means (115a, 115b) are in the form of a lighting array emitting electromagnetic radiation in the visible spectrum to ensure marker visibility to the optical sensor device (105).

3. Apparatus according to claim 1 or 2, wherein the illumination means (115a, 115b) are in the form of a lighting array emitting electromagnetic radiation in the infrared spectrum to ensure marker visibility to the optical sensor device (105).

4. Apparatus according to any preceding claim, wherein the controller device (110) dynamically adjusts lighting conditions of a game environment including the game surface (121) in real-time, by adjusting conditions including brightness, contrast, and exposure, based on feedback from the optical sensor device (105).

5. Apparatus according to any preceding claim, and further comprising a software subsystem arranged to operate on the data processing device (100) to interpret a digital form of the unique identification marker (2) of the or each game piece (121) and to accurately detect and decode the or each game piece marker.

6. Apparatus according to any preceding claim , wherein the transformation matrix provides information about a position and orientation of the unique identification marker (2) in three-dimensional space.

7. A method of automatic detection of position and orientation of one or more game pieces (120) within the bounds of a game surface (121), the or each game piece carrying a unique identification marker (2), optically monitoring (6) said game surface (121) with an optical sensing device (105) including optically monitoring for the unique identification marker (2) of the or each game piece (121), said monitoring further including controlling (10) the illumination of said game surface (121) with electromagnetic radiation and receiving image data of the or each unique identification marker (2) from said optical sensing device (105), and processing said image data to detect position and orientation of said one or more game pieces (120) relative to said optical sensor device (105), **characterised by** the optical sensor device having its field of vision covering substantially the whole of the game surface (121), the optical sensor device (105) capturing in digital form the or each unique identification marker (2) of respective game pieces, wherein a computer vision sub-system analyses (14) data captured by the optical sensor device (105) to identify and extract the or each unique identification marker (2), wherein the computer vision sub-system implements a series of image processing steps of the data captured by the optical sensor device (105), wherein the image processing steps carried out by the vision subsystem identifies the unique identification marker (2) relative to the optical sensor device (105) and subsequently calculating a transformation matrix for the or each unique identification marker that relates the individual unique identification marker coordinate system relative to the coordinate system of the optical sensor device, thereby determining the position and orientation of the unique identification marker (2) relative to the optical sensor device (105).

8. A method according to claim 7, wherein the illumination is with light in the visible electromagnetic spectrum and/or in the infrared electromagnetic spectrum.

9. A method according to claims 7 or 8 , and further comprising the optical sensor device capturing in digital form the or each unique identification marker of respective game piecesand wherein a software subsystem operates on the data processing device to interpret the digital form of the or each unique identification marker and detecting and decoding the or each unique identification marker.

10. A method according to any one of claims 7 to 9, and continuously monitoring the or each game piece and adapting the illuminating.

11. A method according to any one of claims 7 to 10, wherein the software sub-system is a computer vision sub-system analysing data captured by the optical sensor device to identify and extract the or each unique identification marker and the computer vision sub-system implements a series of image processing steps of the data captured by the optical sensor device, such steps including edge detection, feature extraction, and pattern matching.

12. A method according to claim 11, wherein following data capture, the computer vision sub-system analyses the captured data, thereby identifying and extracting game piece features from a game environment including the game surface.

13. A method according to any one of claims 7 to 12, wherein continuously analysing the captured data and continuously updating the position and orientation of the or each unique identification marker (2) results in continuous tracking of the movement of the or each game piece (120) in real-time.

## Patentansprüche

1. Vorrichtung, umfassend eine Spielfläche (121), auf der eine oder mehrere Spielfiguren (120) beweglich sind, die eine oder mehreren Spielfiguren (120) tragen ein eindeutiges Identifikationsmerkmal (2), ein optisches Sensorgerät (105), das auf die Spielfläche (121) gerichtet ist, ein Steuergerät (110), Beleuchtungsmittel (115a, 115b), die dazu dienen, elektromagnetische Strahlung auf die Spielfläche (121) zu emittieren, und ein Datenverarbeitungsgerät (100), die Anordnung ist so ausgeführt, dass das optische Sensorgerät (105) Bilddaten von der Spielfläche (121) empfängt, einschließlich des eindeutigen Identifikationsmerkmals (2) der oder jeder Spielfigur (120) auf der Spielfläche (121), die Spielfläche wird durch die Beleuchtungsmittel (115a, 115b) beleuchtet, wobei das Steuergerät (110) mit dem optischen Sensorgerät (105) und den Beleuchtungsmitteln (115a, 115b) verbunden ist und dazu dient, die Beleuchtungsmittel als Reaktion auf die Bilddaten zu steuern, die von dem optischen Sensorgerät empfangen werden, das Datenverarbeitungsgerät (100) dient dazu, aus den Bilddaten des oder jedes eindeutigen Identifikationsmerkmals (2) eine Position und Ausrichtung der einen oder mehreren Spielfiguren (120) relativ zu dem optischen Sensorgerät (105) zu erfassen, **dadurch gekennzeichnet, dass** das Sichtfeld des optischen Sensorgeräts im Wesentlichen die gesamte Spielfläche (121) abdeckt und dadurch, dass ein Software-Subsystem so angeordnet ist, dass es das Datenverarbeitungsgerät so betreibt, dass es eine digitale Form des eindeutigen Identifikationsmerkmals (2) der oder jeder Spielfigur (120) interpretiert und präzise das oder jedes Spielfiguren-Merkmal erfasst und decodiert, wobei das Software-Subsystem ein Computer-Vision-Subsystem ist, das so angeordnet ist, dass es eine Reihe von Bildverarbeitungsschritten von Daten implementiert, die von dem optischen Sensorgerät (105) erfasst werden, wobei das Computer-Vision-Subsystem dazu dient, eine Transformationsmatrix für das oder jedes eindeutige Identifikationsmerkmal (2) zu berechnen, das ein Koordinatensystem für jedes eindeutige Identifikationsmerkmal relativ zu einem Koordinatensystem des optischen Sensorgeräts betrifft, und dadurch eine Position und Ausrichtung des eindeutigen Identifikationsmerkmals (2) relativ zu dem optischen Sensorgerät (105) bestimmt.

2. Vorrichtung nach Anspruch 1, wobei die Beleuchtungsmittel (115a, 115b) die Form eines Beleuchtungsarrays aufweisen, der elektromagnetisches Strahlung im sichtbaren Spektrum emittiert, um eine Merkmalssichtbarkeit gegenüber dem optischen Sensorgerät (105) sicherzustellen.

3. Vorrichtung nach Anspruch 1 oder 2, wobei die Beleuchtungsmittel (115a, 115b) die Form eines Beleuchtungsarrays aufweisen, der elektromagnetische Strahlung im Infrarotspektrum emittiert, um eine Merkmalssichtbarkeit für das optische Sensorgerät (105) sicherzustellen.

4. Vorrichtung nach einem der vorstehenden Ansprüche, wobei das Steuergerät (110) Lichtbedingungen einer Spielumgebung in Echtzeit dynamisch anpasst, einschließlich der Spielfläche (121), indem Bedingungen angepasst werden, die Helligkeit, Kontrast und Exposition, basierend auf einem Feedback von dem optischen Sensorgerät (105), einschließen.

5. Vorrichtung nach einem der vorstehenden Ansprüche und ferner umfassend ein Software-Subsystem, das so angeordnet ist, dass es auf dem Datenverarbeitungsgerät (100) betrieben wird, um eine digitale Form des eindeutigen Identifikationsmerkmals (2) der oder jeder Spielfigur (121) zu interpretieren und das oder jedes Spielfiguren-Merkmal präzise zu erfassen und zu decodieren.

6. Vorrichtung nach einem der vorstehenden Ansprüche, wobei die Transformationsmatrix Informationen zu einer Position und Ausrichtung des eindeutigen Identifikationsmerkmals (2) im dreidimensionalen Raum bereitstellt.

7. Verfahren zur automatischen Erfassung einer Position und Ausrichtung einer oder mehrerer Spielfiguren (120) innerhalb der Abgrenzungen der Spielfläche (121), wobei die oder jede der Spielfiguren ein eindeutiges Identifikationsmerkmal (2) trägt, optisches Überwachen (6) der Spielfläche (121) mit einem optischen Sensorgerät (105), das ein optisches Überwachen des eindeutigen Identifikationsmerkmals (2) der oder jeder Spielfigur (121) einschließt, wobei das Überwachen ferner das Regeln (10) der Beleuchtung der Spielfläche (121) mit elektromagnetischer Strahlung und das Empfangen von Bilddaten des oder jedes eindeutigen Identifikationsmerkmals (2) von dem optischen Sensorgerät (105) einschließt, und das Verarbeiten der Bilddaten, um eine Position und Ausrichtung der einen oder mehreren Spielfiguren (120) relativ zu dem optischen Sensorgerät (105) zu erfassen, **gekennzeichnet dadurch, dass** das optische Sensorgerät ein Sichtfeld aufweist, das im Wesentlichen die gesamte Spielfläche (121) abdeckt, wobei das optische Sensorgerät (105) das oder jedes Identifikationsmerkmal (2) der entsprechenden Spielfiguren erfasst, wobei ein Computer-Vision-Subsystem (14) Daten analysiert, die von dem optischen Sensorgerät (105) erfasst wurden, um das oder jedes eindeutige Identifikationsmerkmal (2) zu identifizieren und zu extrahieren, wobei das Computer-Vision-Subsystem eine Reihe von Bildverarbeitungsschritten der Daten implementiert, die von dem optischen Sensorgerät (105) erfasst wurden, wobei die Bildverarbeitungsschritte, die von dem Vision-Subsystem ausgeführt werden, das eindeutige Identifikationsmerkmal (2) relativ zu dem optischen Sensorgerät (105) identifizieren und nachfolgend eine Transformationsmatrix für das oder jedes Identifikationsmerkmal berechnen, das sich auf das individuelle eindeutige Identifikationsmerkmal-Koordinatensystem relativ zu dem Koordinatensystem des optischen Sensorgeräts bezieht, wodurch die Position und Ausrichtung des eindeutigen Identifikationsmerkmals (2) relativ zu dem optischen Sensorgerät (105) bestimmt wird.

8. Verfahren nach Anspruch 7, wobei die Beleuchtung mit Licht im sichtbaren elektromagnetischen Spektrum und/oder im elektromagnetischen Infrarotspektrum erfolgt.

9. Verfahren nach Anspruch 7 oder 8 und ferner umfassend das optische Sensorgerät, das in digitaler Form das oder jedes eindeutige Identifikationsmerkmal der entsprechenden Spielfiguren erfasst und wobei ein Software-Subsystem auf dem Datenverarbeitungsgerät läuft, um die digitale Form des oder jedes eindeutigen Identifikationsmerkmals zu interpretieren und das oder jedes eindeutige Identifikationsmerkmal zu erfassen und zu decodieren.

10. Verfahren nach einem der Ansprüche 7 bis 9, und fortlaufendes Überwachen der oder jeder Spielfigur und Anpassen der Beleuchtung.

11. Verfahren nach einem der Ansprüche 7 bis 10, wobei das Software-Subsystem ein Computer-Vision-Subsystem ist, das Daten analysiert, die von dem optischen Sensorgerät erfasst wurden, um das oder jedes eindeutige Identifikationsmerkmal zu identifizieren und zu extrahieren, und das Computer-Vision-Subsystem eine Reihe von Bildverarbeitungsschritten der Daten implementiert, die von dem optischen Sensorgerät erfasst werden, wobei diese Schritte Kantenerkennung, Merkmalextraktion und Musterabgleich einschließen.

12. Verfahren nach Anspruch 11, wobei das Computer-Vision-Subsystem nach der Datenerfassung die erfassten Daten analysiert, wodurch Spielfiguren-Merkmale von einer Spielumgebung, einschließlich der Spielfläche identifiziert und extrahiert werden.

13. Verfahren nach einem der Ansprüche 7 bis 12, wobei das fortlaufende Analysieren der erfassten Daten und das fortlaufende Aktualisieren der Position und Ausrichtung des oder jedes eindeutigen Identifikationsmerkmals (2) zu einer fortlaufenden Nachverfolgung der Bewegung der oder jeder Spielfigur (120) in Echtzeit führt.

## Revendications

1. Appareil comprenant une surface de jeu (121) sur laquelle une ou plusieurs pièces de jeu (120) sont mobiles, la ou les pièces de jeu (120) portant un marqueur d'identification unique (2), un dispositif de capteur optique (105) dirigé vers ladite surface de jeu (121), un dispositif de commande (110), un moyen d'éclairage (115a, 115b) servant à émettre un rayonnement électromagnétique vers ladite surface de jeu (121), et un dispositif de traitement de données (100), l'agencement est tel que ledit dispositif de capteur optique (105) est agencé pour recevoir des données d'image de la surface de jeu (121) comportant le marqueur d'identification unique (2) de la ou de chaque pièce de jeu (120) sur la surface de jeu (121), la surface de jeu étant éclairée par ledit moyen d'éclairage (115a, 15b), dans lequel le dispositif de commande (110) est connecté au dispositif de capteur optique (105) et au moyen d'éclairage (115a, 115b) et sert à commander le moyen d'éclairage en réponse aux données d'image reçues par le dispositif de capteur optique, ledit dispositif de traitement de données (100) servant à détecter à partir desdites données d'image du ou de chaque marqueur d'identification unique (2) une position et une orientation de ladite une ou plusieurs pièces de jeu (120) par rapport audit dispositif de capteur optique (105) **caractérisé en ce que** le dispositif de capteur optique possède son champ de vision couvrant sensiblement la totalité de la surface de jeu (121) et **en ce qu'**un sous-système logiciel est agencé pour fonctionner sur le dispositif de traitement de données pour interpréter une forme numérique du marqueur d'identification unique (2) de la ou de chaque pièce de jeu (120) et pour détecter et décoder avec précision le ou chaque marqueur de pièce de jeu, le sous-système logiciel étant un sous-système de vision par ordinateur agencé pour mettre en œuvre une série d'étapes de traitement d'image de données capturées par le dispositif de capteur optique (105), dans lequel le sous-système de vision par ordinateur sert à calculer une matrice de transformation pour le ou chaque marqueur d'identification unique (2) qui concerne un système de coordonnées destiné à chaque marqueur d'identification unique par rapport à un système de coordonnées du dispositif de capteur optique, ce qui permet alors de détermine ainsi une position et une orientation du marqueur d'identification unique (2) par rapport au dispositif de capteur optique (105).

2. Appareil selon la revendication 1, dans lequel le moyen d'illumination (115a, 115b) se présente sous la forme d'un réseau d'éclairage émettant un rayonnement électromagnétique dans le spectre visible pour assurer la visibilité du marqueur au dispositif de capteur optique (105).

3. Appareil selon la revendication 1 ou 2, dans lequel le moyen d'illumination (115a, 115b) se présente sous la forme d'un réseau d'éclairage émettant un rayonnement électromagnétique dans le spectre infrarouge pour assurer la visibilité du marqueur au dispositif de capteur optique (105).

4. Appareil selon une quelconque revendication précédente, dans lequel le dispositif de commande (110) ajuste de manière dynamique les conditions d'éclairage d'un environnement de jeu comportant la surface de jeu (121) en temps réel, en ajustant les conditions comportant la luminosité, le contraste et l'exposition, en fonction d'une rétroaction provenant du dispositif de capteur optique (105).

5. Appareil selon une quelconque revendication précédente, et comprenant en outre un sous-système logiciel agencé pour fonctionner sur le dispositif de traitement de données (100) pour interpréter une forme numérique du marqueur d'identification unique (2) de la ou de chaque pièce de jeu (121) et pour détecter et décoder avec précision le marqueur de pièce de jeu ou chaque pièce de jeu.

6. Appareil selon une quelconque revendication précédente, dans lequel la matrice de transformation fournit des informations concernant une position et une orientation du marqueur d'identification unique (2) dans un espace tridimensionnel.

7. Procédé de détection automatique de la position et de l'orientation d'une ou plusieurs pièces de jeu (120) dans les limites d'une surface de jeu (121), la ou chaque pièce de jeu portant un marqueur d'identification unique (2), de surveillance optique (6) de ladite surface de jeu (121) à l'aide d'un dispositif de capteur optique (105) comportant la surveillance optique destinée au marqueur d'identification unique (2) de la ou de chaque pièce de jeu (121), ladite surveillance comportant en outre la commande (10) de l'illumination de ladite surface de jeu (121) avec un rayonnement électromagnétique et la réception des données d'image du ou de chaque marqueur d'identification unique (2) provenant dudit dispositif de capteur optique (105), et le traitement desdites données d'image pour détecter la position et l'orientation de ladite une ou plusieurs pièces de jeu (120) par rapport audit dispositif de capteur optique (105), **caractérisé en ce que** le dispositif de capteur optique possédant son champ de vision couvrant sensiblement la totalité de la surface de jeu (121), le dispositif de capteur optique (105) capturant sous forme numérique le ou chaque marqueur d'identification unique (2) des pièces de jeu respectives, dans lequel un sous-système de vision informatique analyse (14) les données capturées par le dispositif de capteur optique (105) pour identifier et extraire le ou chaque marqueur d'identification unique (2), dans lequel le sous-système de vision par ordinateur met en œuvre une série d'étapes de traitement d'image des données capturées par le dispositif de capteur optique (105), dans lequel les étapes de traitement d'image effectuées par le sous-système de vision identifient le marqueur d'identification unique (2) par rapport au dispositif de capteur optique (105) et calculant ultérieurement une matrice de transformation destiné au ou à chaque marqueur d'identification unique qui est en rapport avec le système de coordonnées du marqueur d'identification unique individuel par rapport au système de coordonnées du dispositif de capteur optique, ce qui permet la détermination de la position et de l'orientation du marqueur d'identification unique (2) par rapport au dispositif de capteur optique (105).

8. Procédé selon la revendication 7, dans lequel l'illumination est effectuée avec de la lumière dans le spectre électromagnétique visible et/ou dans le spectre électromagnétique infrarouge.

9. Procédé selon les revendications 7 ou 8, et comprenant en outre le fait que le dispositif de capteur optique capture sous forme numérique le ou chaque marqueur d'identification unique de pièces de jeu respectives et dans lequel un sous-système logiciel fonctionne opère sur le dispositif de traitement de données pour interpréter la forme numérique du ou de chaque marqueur d'identification unique et détectant et décodant le ou chaque marqueur d'identification unique.

10. Procédé selon l'une quelconque des revendications 7 à 9, et surveillant en continu la ou chaque pièce de jeu et adaptant l'éclairage.

11. Procédé selon l'une quelconque des revendications 7 à 10, dans lequel le sous-système logiciel est un sous-système de vision par ordinateur analysant des données capturées par le dispositif de capteur optique pour identifier et extraire le ou chaque marqueur d'identification unique et le sous-système de vision par ordinateur met en œuvre une série d'étapes de traitement d'image des données capturées par le dispositif de capteur optique, ces étapes comportant la détection de bord, l'extraction de caractéristique et la correspondance de motif.

12. Procédé selon la revendication 11, dans lequel, après la capture de données, le sous-système de vision par ordinateur analyse les données capturées, ce qui permet d'identifier et d'extraire des caractéristiques de pièce de jeu à partir d'un environnement de jeu comportant la surface de jeu.

13. Procédé selon l'une quelconque des revendications 7 à 12, dans lequel l'analyse continue des données capturées et la mise à jour continue de la position et de l'orientation du ou de chaque marqueur d'identification unique (2) résultent en un suivi continu du mouvement de la ou de chaque pièce de jeu (120) en temps réel.
